# EUROPÄISCHE PATENTSCHRIFT

(11) **EP 0 831 037 B1**
(45) Veröffentlichungstag und Bekanntmachung des Hinweises auf die Patenterteilung: **17.04.2002**
(21) Anmeldenummer: 97115401.8
(22) Anmeldetag: 05.09.1997
(51) Int. Cl.: B65G 1/137, B65G 1/02

(54) **Rechnergesteuerte Kommissioniervorrichtung zum Kommissionieren von Hardgood-Artikeln**
Computer-controlled device for the preparation of orders of hardgood-articles
Dispositif de commande par calculateur pour la préparation des commandes d'articles solides

(30) Priorität: 24.09.1996 DE 19639045
(43) Veröffentlichungstag der Anmeldung: 25.03.1998
(73) Patentinhaber: Quelle Aktiengesellschaft, 90762 Fürth (DE)
(72) Erfinder: Büschel, Steffan, 90762 Fürth (DE); Häussler, Jörg, 90480 Nürnberg (DE); Christ, Ferdinand, 91575 Windsbach (DE); Pawlikowski, Georg, 91522 Ansbach (DE)
(74) Vertreter: Matschkur, Lindner Blaumeier Patent- und Rechtsanwälte

(56) Entgegenhaltungen:
- FR-A- 2 252 966
- FR-A- 2 614 878
- US-A- 5 096 090

## Beschreibung

Die Erfindung betrifft eine rechnergesteuerte Kommissioniervorrichtung zum Kommissionieren von Hardgood-Artikeln, mit einem motorisch antreibbaren Förderband, und mehreren, an wenigstens einer Seite des Förderbandes angeordneten, von Seitenwänden und einem Boden schachtartig begrenzten und zum Förderband hin geneigten Aufnahmen, die an einem Trägergestell nebeneinander und in Ebenen übereinander angeordnet sind, und an deren förderbandseitigem Ende eine rechnergesteuerte Abgabevorrichtung angeordnet ist.

Eine derartige Kommissioniervorrichtung ist beispielsweise aus EP 0 183 074 B1 bekannt. Bei dieser Vorrichtung werden die kommissionierbaren Artikel in die jeweiligen Schächte von der dem Förderband abgewandten Seite her eingebracht. Die Ausgabe auf das Förderband erfolgt rechnergesteuert durch Betätigung entsprechender, den einzelnen Aufnahmen zugeordneten Abgabevorrichtungen. Um an diese zu Wartungs- und Reparaturzwecken zu gelangen, ist bei dieser Vorrichtung der Stillstand des Förderbandes der Anlage erforderlich, um an diese zu gelangen. Um dies zu vereinfachen, ist es ferner bekannt, bodenseitig Rollen vorzusehen, mittels welchen das die Aufnahmen beinhaltende Trägergestell, das dann entsprechend klein dimensioniert ist, vom Förderband senkrecht dazu weggezogen werden kann, so daß man in den Bereich der Abgabevorrichtungen gelangt. Nachteilig hierbei aber ist, daß selbst wenn nur ein einzelner Auswerfer oder eine einzelne Ebene zu warten ist, stets das komplette Trägergestell entfernt werden muß, um dorthin zu gelangen. Dies führt dazu, daß die komplette Vorrichtung aus dem Kommissionierprozeß ausgekoppelt wird, was einen beachtlichen Verlust an Kommissionierleistung bedeutet. Auch im Falle etwaiger Nachführschwierigkeiten der in den Aufnahme befindlichen Artikel ist stets das gesamte Trägergestell zu entfernen.

Eine Kommissioniervorrichtung mit in Richtung von deren Längsachse ausziehbaren Aufnahmen ist aus der US-A-5 096 090 bekannt.

Der Erfindung liegt damit das Problem zugrunde, eine Kommissioniervorrichtung anzugeben, die in ihrer Handhabung und hinsichtlich ihrer Betriebsbereitschaft auch im Falle etwaiger Schwierigkeiten verbessert ist.

Zur Lösung dieses Problems ist bei einer Kommissioniervorrichtung der eingangs genannten Art erfindungsgemäß vorgesehen, daß zumindest ein Teil der Aufnahmen wenigstens einer Ebene und die ihnen zugeordneten Abgabevorrichtungen bezüglich des Trägergestells über eine Auszieheinrichtung beweglich gelagert und aus diesem und damit aus dem Ebenenverbund in einer Richtung senkrecht zur Längsachse der Aufnahmen gemeinsam seitlich ausziehbar sind.

Bevorzugt sind alle Aufnahmen einer Ebene quasi schiebetischartig aus dem Trägergestell ausziehbar, so daß zum einen die Abgabevorrichtungen erreichbar sind, ohne das Förderband stillegen zu müssen. Darüber hinaus ist es möglich, die Aufnahmen nur einer bestimmten Ebene aus dem Kommissionierbetrieb abzukoppeln, die anderen Ebenen können aber vollumfänglich weiterarbeiten, so daß mit einer etwaigen Wartung oder Reparatur nicht mehr das komplette Stillegen der Kommissioniervorrichtung verbunden ist.

In weiterer Erfindungsausgestaltung kann vorgesehen sein, daß die Auszieheinrichtung die Aufnahmen und die diesen zugeordneten Abgabevorrichtungen tragende Trägerelemente, ggf. einen Tragrahmen, und am Trägergestell angeordnete Führungen umfaßt, längs welcher die Trägerelemente bewegbar sind. Dabei kann die Führung als sich horizontal erstreckende Traverse mit daran seitlich angebrachten Führungsrollen ausgebildet sein, auf welchen die schienenartigen Trägerelemente, diese zur Halterung der Trägerelemente ggf. hintergreifend, gleiten. Auf diese Weise ist für eine sichere Führung und ein einfaches Ausziehen der jeweiligen Aufnahmenebenen gesorgt.

Zum gezielten Stillegen der Abgabevorrichtungen lediglich einer Ebene kann dies beispielsweise seitens der Rechnersteuerung geregelt werden. Alternativ hierzu hat es sich aber als zweckmäßig erwiesen, wenn elektrische Verbindungsmittel zum lösbaren Verbinden von zum Betrieb der an der Auszieheinrichtung angeordneten Aufnahmen zugeordneten Abgabevorrichtungen dienenden Versorgungsund/oder Steuerleitungen vorgesehen sind, so daß zum einen kein aufwendiger steuerungsrechnerseitiger Eingriff erforderlich ist, und zum anderen auf eine Mitführung der Versorgungs- und/oder Steuerleitungen während des Ausziehens verzichtet werden kann. Die Verbindungsmittel sind zweckmäßigerweise als Steckverbindung ausgeführt, wobei ein erstes Teil fest am Trägergestell und ein zweites Teil an der Auszieheinrichtung oder im Bereich der Aufnahmen angeordnet ist, so daß auf diese Weise ein einfaches, eine sichere Verbindung ermöglichendes Koppeln realisiert ist.

Ein weiterer gravierender Nachteil bisher bekannter Kommissioniervorrichtungen besteht darin, daß die schachtartigen Aufnahmen entsprechend stark zum Förderband hin geneigt sind, um ein sicheres Nachrutschen der eingebrachten Artikel zu gewährleisten. Dies führt dazu, daß auf den Abgabevorrichtungen ein beachtliches, von den daran anliegenden Artikeln ausgeübtes Gewicht lastet. Um zum einen für ein sicheres Nachrutschen der Artikel zu sorgen, kann im Rahmen der Erfindung vorgesehen sein, daß zumindest in einem Teilbereich jeder Aufnahme die eingebrachten Artikel tragende Rollen-, Walzen- oder Kugelelemente vorgesehen sind, auf denen die Artikel einfach ohne großen Reibungswiderstand nachrutschen können. Dabei hat es sich als zweckmäßig erwiesen, wenn die Rollen-, Walzen- oder Kugelelemente an einem im Bereich der Aufnahme lösbar anbringbaren Träger, insbesondere einer Leiste angeordnet sind, so daß sie wahlweise versetzbar sind, um auf diese Weise auf eine sich entsprechend ändernde Artikelgröße reagieren zu können. Der Träger kann erfindungsgemäß in einer an einer die Böden der Aufnahmen bildenden Bodenplatte ausgebildeten Steckaufnahmem od.dgl. einsetzbar sein. Des weiteren können erfindungsgemäß die Seitenwände lösbar anbringbar, insbesondere in an der Bodenplatte ausgebildeten Steckaufnahmen od.dgl. einsetzbar sein, so daß auch diese bei sich ändernder Artikelgröße entsprechend versetzt werden können, da diese letztlich für die Seitenführung der Artikel benötigt werden. Darüber hinaus können auch die ggf. direkt an der Bodenplatte angeordneten Abgabevorrichtungen versetzbar angeordnet sein.

Um auch die sich aus der im Stand der Technik gegebenen starken Neigung der Aufnahmen ergebenden Schwierigkeiten hinsichtlich der Belastung der Abgabevorrichtungen und der unteren Artikel zu beseitigen, kann in weiterer Erfindungsausgestaltung vorgesehen sein, daß jede Aufnahme und damit jede Ebene im Bereich zum Förderband hin stärker bezüglich der Horizontalen geneigt ist, als im übrigen Bereich. Dies ist bedingt durch die Anordnung der Rollen-, Walzen- oder Kugelelemente möglich, da eine starke, für das Nachrutschen im Stand der Technik erforderliche Neigung hier nun nicht mehr nötig ist. Vielmehr ist es ausreichend, wenn eine stärkere Neigung lediglich im Bereich nahe dem Förderband gegeben ist. Der daran anschließende, deutlich längere Bereich der Aufnahme kann dann ein deutlich geringeres Gefälle im Bereich weniger Grade aufweisen, da bedingt durch die Rollenführung der Artikel diese sicher nachgeführt werden. Als zweckmäßig hat es sich hierbei erwiesen, wenn jede Aufnahme zumindest in dem förderbandnahen Bereich längs einer bogenförmigen Kurve geneigt ist. Des weiteren kann erfindungsgemäß vorgesehen sein, daß das Trägergestell bodenseitig auf Rollen oder Rädern gelagert ist, um auch bei dieser Kommissioniervorrichtung ein seitliches, senkrecht zum Förderband gerichtetes Auszeihen zu ermöglichen.

Weitere Vorteile, vorteilhafte Merkmale und Einzelheiten der Erfindung ergeben sich aus dem im folgenden beschriebenen Beispiel sowie anhand der Zeichnungen. Dabei zeigen:
- Fig. 1: eine Seitenansicht auf eine erfindungsgemäße Kommissioniervorrichtung, wobei auf beiden Seiten des Förderbandes Aufnahmen vorgesehen sind,
- Fig. 2: eine Aufsicht auf ein Trägergestell und die Aufnahmenebene, im eingeschobenen Zustand,
- Fig. 3: eine Rückseitenansicht des Trägergestells aus Fig. 2,
- Fig. 4: eine Aufsicht auf ein Trägegestell (als Teilansicht) mit beidseitig ausgezogenen Aufnahmeebenen, und
- Fig. 5: eine Rückseitenansicht des kompletten Trägergestells aus Fig. 4.

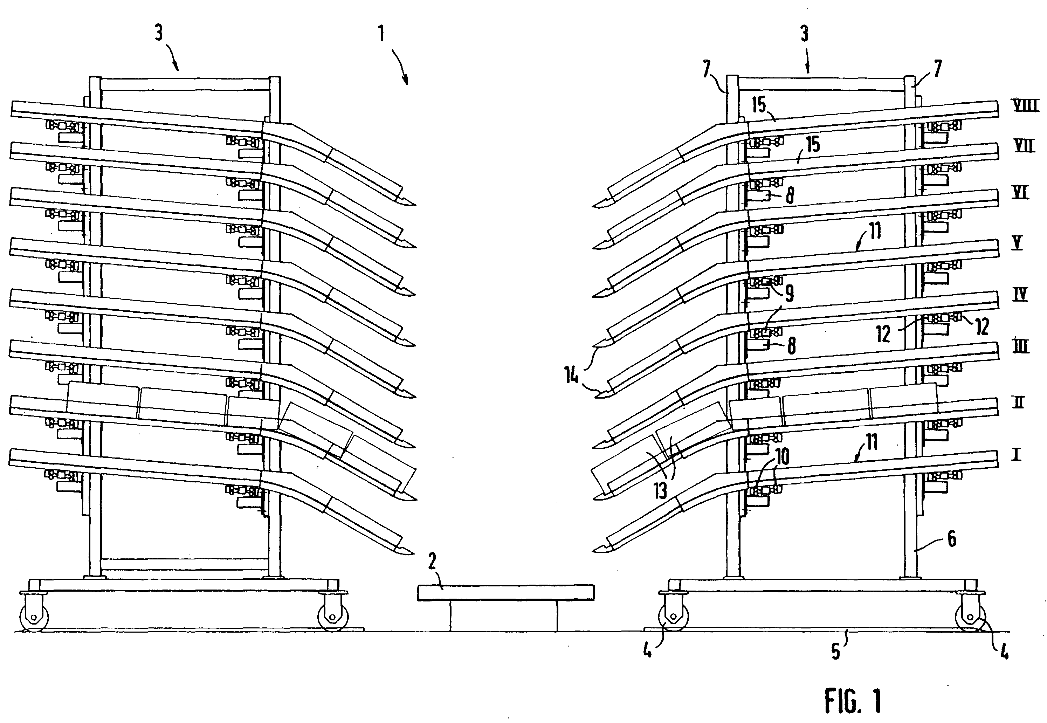

Fig. 1 zeigt eine erfindungsgemäße Kommissioniervorrichtung 1, bestehend aus zwei seitlich eines Förderbandes 2 angeordneten Modulen 3. Jedes Modul weist zunächst ein auf Rädern 4 bodenseitig über Führungsschienen 5 geführtes Trägergestell 6 auf, welches mittels der Räder 4 senkrecht zur Förderrichtung des Förderbandesbandes 2 ausziehbar ist. An den Vertiklträgern 7 des Trägergestells 6 sind an der zum Förderband 2 abgewandten Seite mittels geeigneter Befestigungselemente 8, die an den Vertikalträgern 7 angeschraubt sind, horizontal verlaufende Traversen 9 angeordnet, welche mit seitlichen Laufrollen 10 versehen sind. Auf diesen Laufrollen 10 sind die nebeneinandergeordneten Aufnahmen 11 jeweils einer Ebene I, II, III ... VIII horizontal ausziehbar über die auf den Rollen 10 laufenden Trägerelemente 12 gelagert. In den Aufnahmen 11, von denen in jeder Ebene mehrere nebeneinander vorgesehen sind, sind die zu kommissionienden Artikel 13 angeordnet, welche auf das Förderband 2 im Bedarfsfall abzugeben sind. Wie Fig. 1 zeigt, ist jede Aufnahmenebene im Bereich zum Förderband 2 hin stärker geneigt als im hinteren, sich im Bereich des Trägergestells 6 erstreckenden Bereich. In Verbindung mit den bezüglich der nachfolgenden Figuren beschriebenen Rollen läßt sich auf diese Weise eine hinreichende Nachführung auch bei geringer Aufnahmeneigung realisieren. Die Abgabe der Artikel 13 wird über rechnergesteuert betätigbare Abgabevorrichtungen 14 bewerkstelligt. Die Aufnahmen 11 sind voneinander über sich im wesentlichen längs der gesamten Ebene erstreckende Seitenwände 15 voneinander getrennt.

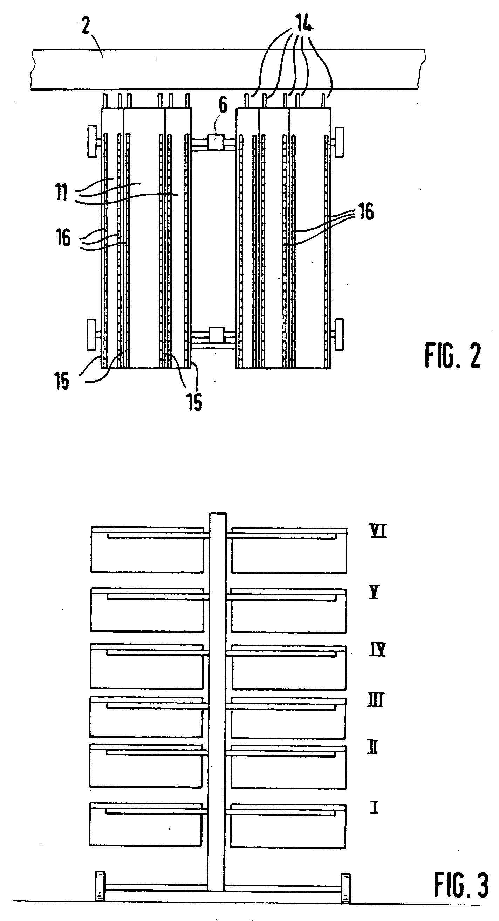

Fig. 2 zeigt eine Aufsicht auf das rechte Modul aus Fig. 1 im Schnitt. Dieses ist derart aufgebaut, daß beidseitig neben dem Trägergestell 6 separate Ausziehebenen vorgesehen sind. Im gezeigten Beispiel besitzt jede Ausziehebene drei Aufnahmen 11, die mittels der Seitenwände 15 voneinander abgetrennt sind. Diese Seitenwände 15 sind zur Veränderung der Breite der Aufnahmen 11 und damit zur Ermöglichung der Einlagerung unterschiedlich großer Artikel versetzbar. Dies gilt gleichermaßen für die der jeweiligen Aufnahme 11 zugeordneten Abgabevorrichtungen 14. Wie Fig. 2 ferner zeigt, weist jede Aufnahme 11 eine oder mehrere Bahnen von Rollenelemente 16 auf, die ebenfalls, indem sie beispielsweise an einer lösbaren Leiste od.dgl. angeordnet sind, versetzbar sind, um auch hier auf entsprechend unterschiedliche Artikelgrößen reagieren zu können. Diese Rollenelemente 16 lagern die in die jeweilige Aufnahme 11 eingebrachten Artikel auf und ermöglichen so ein Nachrollen, was es ermöglicht, die Neigung der jeweiligen Ebene entsprechend gering zu halten, da nicht wie bisher im Stand der Technik der jeweilige Artikel direkt auf dem Boden der Aufnahme aufliegt und so entsprechend reibungsgelagert ist, was eine sehr starke Neigung erforderte. Vielmehr ist es hier ausreichend, lediglich eine geringe Neigung, die zum Förderband hin etwas stärker, vgl. Fig. 1 längs einer bogenförmigen Kurve, zunimmt. Dies ist natürlich auch dahingehend sehr vorteilhaft, als die Gesamthöhe der Vorrichtung und damit natürlich auch die Beladehöhe (die Aufnahmen sind rückseitig zu beladen) entsprechend geringer ist als im Stand der Technik, da die jeweiligen rückseitigen Aufnahmeöffnungen wesentlich niedriger liegen und so ein Zugriff problemloser möglich ist. Infolgedessen ist es letztlich auch möglich, mehr Ebenen übereinanderzustapeln, als dies bisher beim Stand der Technik der Fall war, bei gleichbleibender Bauhöhe. Selbstverständlich ist bedingt durch die niedrige Bauhöhe und die Seitenausziehbarkeit auch ein einfaches Beschicken einer ausgezogenen Ebene möglich.

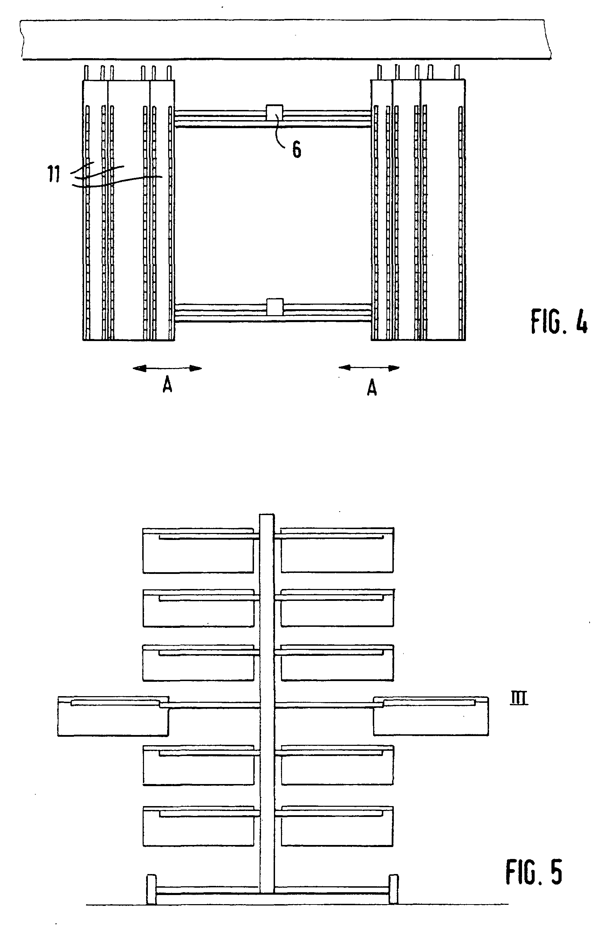

Fig. 3 zeigt schließlich eine Rückseitenansicht des aus Fig. 2 bekannten Moduls 3. Ersichtlich sind sämtliche Ebenen nach innen zum Trägergestell 6 hin eingeschoben. Soll nun zu Wartungszwecken beispielsweise die Ebene III "bearbeitet" werden, so wird diese, vgl. die Figuren 4 und 5, mittels der bezüglich Fig. 1 beschriebenen Auszieheinrichtung nach außen gezogen (vgl. die Doppelpfeile A), wobei natürlich jede einzelne Ebene separat ausgezogen werden kann. Ein derartiger Zustand ist in Fig. 5 gezeigt. Die Aufnahmen sämtlicher anderen, nicht ausgezogenen Ebenen werden vom Auszug der Ebene 3 nicht tangiert, d.h., sie arbeiten ohne Unterbrechung weiter. Die Ebene 3 wird aus dem Kommissionierbetrieb dadurch ausgekoppelt, daß entsprechende, nicht gezeigte Verbindungsmittel der Versorgungs- und Steuerleitungen für die Abgabevorrichtungen 14 beim Ausziehen gelöst werden, so daß die jeweilige Ebene ausgekoppelt und gleichermaßen bei Rückführen wieder eingekoppelt werden kann. Der Übersichtlichkeit halber sind die nicht ausgezogenen Ebenen in Fig. 4 nicht dargestellt.

## Patentansprüche

1. Rechnergesteuerte Kommissioniervorrichtung zum Kommissionieren von Hardgood-Artikeln, mit einem motorisch antreibbaren Förderband, und mehreren, an wenigstens einer Seite des Förderbandes angeordneten, von Seitenwänden und einem Boden schachtartig begrenzten und zum Förderband hin geneigten Aufnahmen, die an einem Trägergestell nebeneinander und in Ebenen übereinander angeordnet sind, und an deren förderbandseitigem Ende eine rechnergesteuerte Abgabevorrichtung angeordnet ist, **dadurch gekennzeichnet, daß** zumindest ein Teil der Aufnahmen (11) wenigstens einer Ebene (I - VIII) und die ihnen zugeordneten Abgabevorrichtungen (14) bezüglich des Trägergestells (6) über eine Auszieheinrichtung beweglich gelagert und aus diesem und damit aus dem Ebenenverbund in einer Richtung senkrecht zur Längsachse der Aufnahmen gemeinsam seitlich ausziehbar sind.

2. Kommissioniervorrichtung nach Anspruch 1, **dadurch gekennzeichnet, daß** die Auszieheinrichtung die Aufnahmen und die diesen zugeordneten Abgabevorrichtungen tragende Trägerelemente, gegebenenfalls einen Tragrahmen, und am Trägergestell angeordnete Führungen umfaßt, längs welcher die Trägerelemente bewegbar sind.

3. Kommissioniervorrichtung nach Anspruch 2, **dadurch gekennzeichnet, daß** die Führung als sich horizontal erstreckende Traverse (9) mit daran seitlich angebrachten Führungsrollen (10) ausgebildet ist, auf welchen die schienenartigen Trägerelemente (12), diese zur Halterung der Trägerelemente gegebenenfalls hintergreifend, gleiten.

4. Kommissioniervorrichtung nach einem der Ansprüche 1 bis 3, **dadurch gekennzeichnet, daß** elektrische Verbindungsmittel zum lösbaren Verbinden von zum Betrieb der den an der Auszieheinrichtung angeordneten Aufnahmen (11) zugeordneten Abgabevorrichtungen (14) dienenden Versorgungsund/oder Steuerleitungen vorgesehen sind.

5. Kommissioniervorrichtung nach Anspruch 4, **dadurch gekennzeichnet, daß** die Verbindungsmittel als Steckverbindung ausgeführt sind, wobei ein erstes Teil fest am Trägergestell und ein zweites Teil an der Auszieheinrichtung oder im Bereich der Aufnahmen angeordnet ist.

6. Kommissioniervorrichtung nach einem der vorangehenden Ansprüche, **dadurch gekennzeichnet, daß** zumindest in einem Teilbereich jeder Aufnahme (11) die eingebrachten Artikel (13) tragende Rollen- (16), Walzen oder Kugelelemente vorgesehen sind.

7. Kommissioniervorrichtung nach Anspruch 6, **dadurch gekennzeichnet, daß** die Rollen- (16), Walzen- oder Kugelelemente an einem im Bereich der Aufnahme (11) lösbar anbringbaren Träger, insbesondere einer Leiste angeordnet sind.

8. Kommissioniervorrichtung nach Anspruch 7, **dadurch gekennzeichnet, daß** der Träger in an einer die Böden der Aufnahmen bildenden Bodenplatte ausgebildeten Steckaufnahmen o.dgl. einsetzbar ist.

9. Kommissioniervorrichtung nach einem der vorangehenden Ansprüche, **dadurch gekennzeichnet, daß** die Seitenwände (15) lösbar anbringbar, insbesondere in an der Bodenplatte ausgebildeten Steckaufnahmen o.dgl. einsetzbar sind.

10. Kommissioniervorrichtung nach einem der vorangehenden Ansprüche, **dadurch gekennzeichnet, daß** die gegebenenfalls direkt an der Bodenplatte angeordneten Abgabevorrichtungen (14) versetzbar angeordnet sind.

11. Kommissioniervorrichtung nach einem der Ansprüche 6 bis 10, **dadurch gekennzeichnet, daß** jede Aufnahme (11) und damit jede Ebene (I - VIII) im Bereich zum Förderband (2) hin stärker bezüglich der Horizontalen geneigt ist, als im übrigen Bereich.

12. Kommissioniervorrichtung nach Anspruch 11, **dadurch gekennzeichnet, daß** jede Aufnahme (11) zumindest im dem Förderband (2) nahen Bereich längs einer bogenförmigen Kurve geneigt ist.

13. Kommissioniervorrichtung nach einem der vorangehenden Ansprüche, **dadurch gekennzeichnet, daß** das Trägergestell (6) bodenseitig auf Rollen oder Rädern (4) gelagert ist.

## Claims

1. Computer-controlled picking device for preparing orders of hard goods, having a motor-driven conveyor belt and a plurality of receiving spaces which are disposed at least on one side of the conveyor belt, are defined as a shaft by side walls and a bottom, and are inclined towards the conveyor belt, and which are disposed adjacent to one another and in planes one above another on a support bogie, and on whose end associated with the conveyor belt a computer-controlled delivery device is disposed, **characterised in that** at least some of the receiving spaces (11) of at least one plane (I-VIII) and the delivery devices (14) allocated thereto are movably mounted relative to the support bogie (6) via a removal device and are removable laterally together from the group of planes in a direction perpendicular to the longitudinal axis of the receiving spaces.

2. Picking device according to claim 1, **characterised in that** the removal device comprises the receiving spaces and support elements, optionally a support frame, carrying the delivery devices associated therewith and guides, which are disposed on the support bogie and along which the support elements are movable.

3. Picking device according to claim 2, **characterised in that** the guide is formed as a horizontally extending cross-beam (9) with laterally mounted guide rollers (10), on which the rail-like support elements (12) optionally engaging behind the same in order to mount the support elements, slide.

4. Picking device according to one of claims 1 to 3, **characterised in that** electric connecting means are provided for the detachable connection of power supply and/or control lines for operating the delivery devices (14) associated with the receiving spaces (11) disposed on the removal device.

5. Picking device according to claim 4, **characterised in that** the connecting means are formed as a plug connection, a first part being disposed rigidly on the support bogie and a second part on the removal device or in the region of the receiving spaces.

6. Picking device according to one of the preceding claims, **characterised in that** at least in a partial region of each receiving space (11) the inserted articles (13) are provided with supporting rollers (16) or ball elements.

7. Picking device according to claim 6, **characterised in that** the roller (16) or ball elements are disposed on a support detachably mountable in the region of the receiving space (11), in particular on a ledge.

8. Picking device according to claim 7, **characterised in that** the support is insertable in insertion seats or the like formed on a base plate forming the bottom of the receiving spaces.

9. Picking device according to one of the preceding claims, **characterised in that** the side walls (15) are detachably mountable, in particular are insertable in insertion seats or the like formed on the base plate.

10. Picking device according to one of the preceding claims, **characterised in that** the delivery devices (14) optionally disposed direct on the base plate are disposed displaceably.

11. Picking device according to one of claims 6 to 10, **characterised in that** each receiving space (11) and hence each plane (I-VIII) is more strongly inclined relative to the horizontal in the area towards the conveyor belt (2) than in the remaining area.

12. Picking device according to claim 11, **characterised in that** each receiving space (11) is inclined in an arcuate curve at least in the area close to the conveyor belt (2).

13. Picking device according to one of the preceding claims, **characterised in that** the support bogie (6) is mounted at the base on rollers or wheels (4).

## Revendications

1. Dispositif de préparation de commandes piloté par calculateur destiné à préparer des commandes d'articles solides, comprenant une bande de transport pouvant être entraînée par moteur, et plusieurs logements de réception disposés sur au moins un côté de la bande de transport, délimités à la manière d'une goulotte par des parois latérales et un fond et inclinés en direction de la bande de transport, qui sont placés côte à côte et en superposition mutuelle dans des plans, sur un châssis de support, et à l'extrémité, côté bande de transport, desquels est placé un dispositif de distribution piloté par calculateur, **caractérisé en ce qu'**au moins une partie des logements de réception (11) d'au moins un plan (I - VIII) et les dispositifs de distribution (14) qui leur sont associés, sont, par l'intennédiaire d'un dispositif d'extraction, montés mobiles par rapport au châssis de support (6) et peuvent, en commun, être extraits latéralement de celui-ci et ainsi de l'ensemble de plans, dans une direction perpendiculaire à l'axe longitudinal des logements de réception.

2. Dispositif de préparation de commandes selon la revendication 1, **caractérisé en ce que** le dispositif d'extraction comprend des éléments de support portant les logements de réception et les dispositifs de distribution qui leur sont associés, le cas échéant un cadre de support, et des guides placés sur le châssis de support et le long desquels peuvent être déplacés les éléments de support.

3. Dispositif de préparation de commandes selon la revendication 2, **caractérisé en ce que** le guide est réalisé sous forme d'une traverse (9) s'étendant horizontalement, sur laquelle sont montés latéralement des galets de guidage (10) sur lesquels glissent les éléments de support (12) en forme de rail, le cas échéant en s'engageant derrière eux pour la retenue des éléments de support.

4. Dispositif de préparation de commandes selon l'une des revendications 1 à 3, **caractérisé en ce que** sont prévus des moyens de connexion électriques pour assurer la connexion séparable de lignes d'alimentation et/ou de lignes de commande servant à faire fonctionner les dispositifs de distribution (14) associés aux logements de réception (11) placés sur le dispositif d'extraction.

5. Dispositif de préparation de commandes selon la revendication 4, **caractérisé en ce que** les moyens de connexion sont réalisés sous forme de connecteur à enfichage, une première partie étant disposée de manière fixe sur le châssis de support, et une seconde partie étant disposée sur le dispositif d'extraction ou dans la zone des logements de réception.

6. Dispositif de préparation de commandes selon l'une des revendications précédentes, **caractérisé en ce qu'**au moins dans une zone partielle de chaque logement de réception (11), sont prévus des éléments à galets (16), à rouleaux ou à billes supportant les articles (13) introduits.

7. Dispositif de préparation de commandes selon la revendication 6, **caractérisé en ce que** les éléments à galets (16), à rouleaux ou à billes sont disposés sur un support, notamment une barre, pouvant être monté, de manière amovible, dans la zone du logement de réception (11).

8. Dispositif de préparation de commandes selon la revendication 7, **caractérisé en ce que** le support peut être inséré dans des logements d'enfichage ou similaires, réalisés sur une plaque de fond formant les fonds des logements de réception.

9. Dispositif de préparation de commandes selon l'une des revendications précédentes, **caractérisé en ce que** les parois latérales (15) peuvent être montées de manière amovible, notamment peuvent être insérées dans des logements d'enfichage ou similaires réalisés sur la plaque de fond.

10. Dispositif de préparation de commandes selon l'une des revendications précédentes, **caractérisé en ce que** les dispositifs de distribution (14) placés, le cas échéant, directement sur la plaque de fond, sont disposés de manière à pouvoir être décalés.

11. Dispositif de préparation de commandes selon l'une des revendications 6 à 10, **caractérisé en ce que** chaque logement de réception (11) et ainsi chaque plan (I-VIII), est incliné plus fortement par rapport à l'horizontale dans la zone dirigée vers la bande de transport (2), que dans la zone restante.

12. Dispositif de préparation de commandes selon la revendication 11, **caractérisé en ce que** chaque logement de réception (11) est incliné le long d'une courbe en forme d'arc de cercle, au moins dans la zone proche de la bande de transport (2).

13. Dispositif de préparation de commandes selon l'une des revendications précédentes, **caractérisé en ce que** le châssis de support (6) est monté, côté sol, sur des roulettes ou des roues (4).
